# EUROPEAN PATENT APPLICATION

(11) **EP 2 887 292 A1**
(43) Date of publication of application: **24.06.2015**
(21) Application number: 14198868.3
(22) Date of filing: 18.12.2014
(51) Int. Cl.: G06Q 20/32, G06Q 20/38, H04L 9/32, H04L 29/06

(54) **Monetary transaction facilitation**

(30) Priority: 19.12.2013 GB 201322562
(71) Applicant: Hawthorne Davies Limited, Brixham, Devon TQ5 BNB (GB)
(72) Inventor: Hawthorne, William, Kingswear, Devon TQ6 0BB (GB)
(74) Representative: Brown, Michael Stanley

(57) **Abstract**

Means for facilitating the carrying out of monetary transactions comprises a device on which a user-specific key is recorded and an algorithm for generating a signal in response to an input, the signal being related to the user-specific key and the time at which the input is received.

## Description

### Field of the Invention

This invention relates to monetary transaction facilitation and is concerned with the provision of improved means and an improved method of facilitating and effecting monetary transactions.

### Summary of the invention

According to a first aspect of the present invention there is provided means for facilitating the carrying out of monetary transactions comprising a device on which a user-specific key is recorded and an algorithm for generating a signal in response to an input, the signal being related to the user-specific key and the time at which the input is received.

The signal is preferably in the form of a cryptographically secure pseudo-random stream, which may be displayed as 4-figure PIN. The algorithm may be such that the stream, and hence the PIN, changes each minute.

According to a second aspect of the present invention, there is provided a method of obtaining funds from an automated teller machine that includes the use of the means defined above to generate the PIN that is entered into the automated teller machine.

### Description of the Preferred Embodiment

The algorithm, which controls the functions of the device, can be incorporated in a smartcard, in a smartwatch, in a mobile phone or in virtually any other electronic security device. The device operates in five distinct situations:
1. At a checkout by pressing a key before entering a "one-time" PIN, referred to subsequently as an OTP, or into an Electronic Point of Sale Machine (EPoS)
2. At a cashpoint Automatic Teller Machine (ATM) as in "1" above
3. In a card-not-present situation in a telephone transaction
4. For personal identification on-line with the bank
5. For personal identification in any account related emergency.

The overall design strategy is to give the cardholder ease of use and peace of mind when using the Device. This is exemplified in information provided as follows:
The user of the device is sent a message as follows:-
   Your Device Key Number is 9270492166173167 (scratch card)
   Your device acts as a watch and works 24/7.

To initiate your device when first you receive it, press "I" and enter the 16-figure Device Key. If you make a mistake when copying the figures, the device will alert you. File this document in a safe place. You must commit the first two figures of the Device Key to memory.

If you are about to insert your Credit/Debit Card into an ATM or EPoS, press "P" and enter the figures on display. In a card-not-present transaction, or logging on to your account, or contacting your bank in an emergency, press "P" when requested.

To disable the device, press "D" and substitute two incorrect first figures. To restore the key, press "D" and re-enter the correct two figures.

If your device is slow or fast, press "S" and use the + and - keys to make the necessary corrections. You can also re-set the time zone in minutes relative to GMT. Under no circumstances whatsoever should you ever reveal any of the 16 figures to any third party, even if that party claims to be your own bank acting in your interest.

### General description of the Device

The Device acts as a clock, which displays hours and minutes. The Device also acts as a calculator.
- It allows adjustments to correct for slow/fast errors and for different time zones.
- It allows the entry of a secret user-specific 16-figure Device Key, provided by the Bank/Issuer. There is no intrinsic upper limit to the strength of the Device Key.
- It acts as a calculating Device which computes and displays a 4-figure OTP which is dependent on the Device Key and the time to the nearest minute at which the OTP is about to be entered at an ATM or an EPoS. The time variable is calculated as the number of minutes from the beginning of the year. The OTP, as its name suggests, is valid for one minute.
- It allows a user to establish his identity by entering the OTP when on line to the bank.
- It allows a user to establish his identity should his card become lost or stolen.

The Device provides an "INITIATING MODE" (I) for entering the Device Key.

The Device provides a "PIN MODE" (P) for displaying the OTP.

The Device provides a "DISABLING MODE" (D) for entering alternatives to the first two figures of the Device Key and for restoring them when required.

### Initiating the system

An account holder applies for his new Device and his new Credit/Debit Card. He may choose to use it in place of or in addition to his existing card. The Device is supplied along with a pseudo-randomly generated 16-figure Device Key in the form of a scratch card. The generating method is described below.

The account holder uses MODE I to enter the Device Key. Under normal circumstances, he is not required to repeat this procedure. The key has a built-in check to ensure that it has been entered correctly:

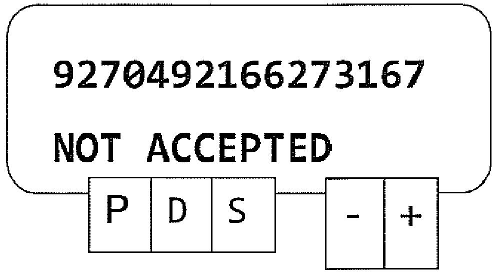

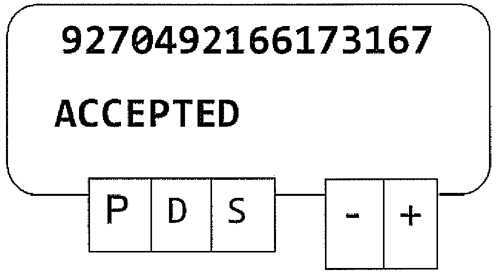

When using the Device in MODE P in a card-present situation at a retail outlet, the user simply presses a key, reads the 4-figure number on display and enters this OTP into the EPoS. The OTP is valid for one minute. When the OTP is evaluated by the bank or by any other authority capable of completing the transaction, allowance is made for the time zone relative to GMT and for the fact that the Device may be inaccurate by ±5 minutes. The bank's version of the basic algorithm allows for 11 separate calculations corresponding to errors of -5, -4, -3, -2, -1, 0 +1, +2, +3, +4, +5. Example for 7th September in Time Zone GMT + 60 where the Device is one minute fast:

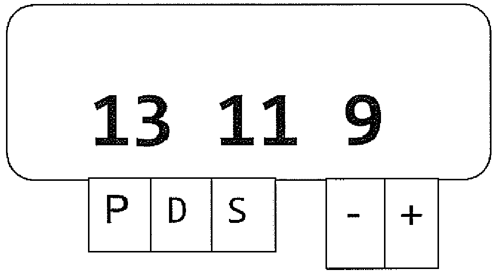

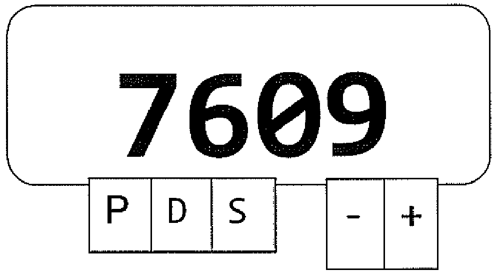

Calculations at the bank on the assumption that the Device could have in an error in the range of ± 5 minutes:

| -5 | -4 | -3 | -2 | -1 | 0 | +1 |
|---|---|---|---|---|---|---|
| 7356 | 2957 | 6264 | 7309 | 1448 | 2945 | 7609 |

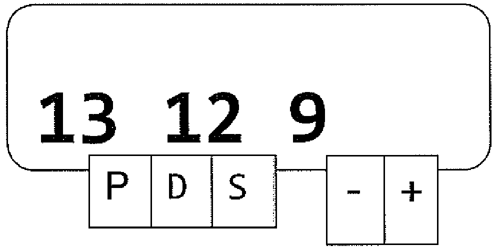

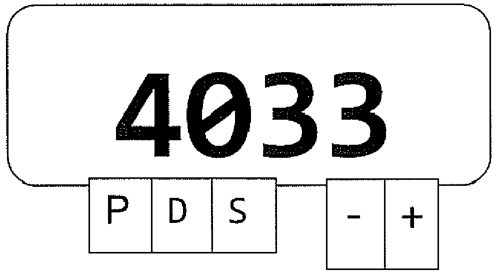

Calculations relative to the twelfth minute:

| -5 | -4 | -3 | -2 | -1 | 0 | +1 |
|---|---|---|---|---|---|---|
| 2957 | 6264 | 7309 | 1448 | 2945 | 7603 | 4033 |

Once it has been authorised, the OTP will not be accepted for another transaction.

Using the Device in MODE P at a cashpoint - As above.

### Using the Device in MODE P in a card-not-present transaction

The user reads the last three digits of the OTP in place of the 3-figure security number on the reverse side of his Credit/Debit Card.

### Using the Device in MODE P to communicate with the bank on line

The user identifies himself on line by entering the OTP displayed on the Device. This replaces or augments the task of entering a User ID and any form of passphrase.

### Using the Device in MODE P for emergency communication

In order to establish his identify, the user reads the OTP on display on the Device.

### Using the Device in MODE D for disabling the Device

The + and - key is used to alter the first two numbers of the 16-figure Device Key:

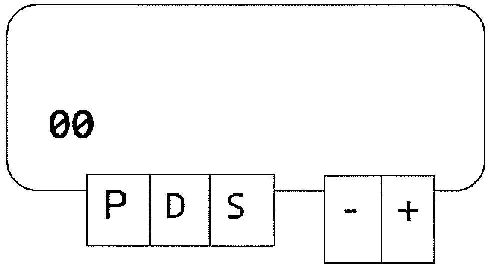

### Attacks on the security of the system: Introduction

The algorithm, which calculates the OTP, uses the "Subjective Hash" algorithm based on the HFX40-I algorithm registered in Geneva as ITU Recommendation T38. The algorithm has no upper limit in relation to Device Key strength, so the Device can be built around any a Device Key of any required strength. The calculation can also be carried out by any adaptation of a standard "hash" algorithm provided it contains the following features:
a) The information being hashed is secret
b) The hash algorithm is a one-way function which makes it mathematically infeasible to determine the hash key from OTPs and matching time and date data.

### Attack 1: Shoulder surfing

A fraudster gains no advantage by observing the entry of the OTP in any card-present situation.

### Attack 2: Man in the middle attack

The bank/issuer disallows two transactions using the same OTP. This prevents a fraudster who is eavesdropping on an on-line transaction from making use of any information received.

### Attack 3: Trojan

The Device is merely a clock and a calculator. As such, it is disconnected from the web and therefore impervious to malware of any kind.

### Attack 4: Theft

When a user becomes aware that his Device has been stolen, he can inform the bank and have his account frozen. The threat is only valid if the victim's credit card has also been stolen. An extra precaution is to use MODE D when there is any perceived risk of theft. The thief is then obliged to use OTPs on a trial and error basis. The bank/issuer will be immediately aware of fraud and can take the further step of informing the police at which ATM/EPoS the OTP is being used.

### Attack 5: Phishing

No security system, even at the highest level of national security, can be effective against "the enemy within" who is willing to give away secret information. In the context of banking security, the current methods of phishing succeed by deceiving the victim into believing that the secret information he is divulging has no secrecy value. The Device Key scratch card contains an unequivocal warning as described earlier. If the Device is supplied hard-wired with the Device Key, and the user is only supplied with knowledge of the first two figures, then a phishing attack is impossible.

The method of generating the Device Key uses Subjective Hash technology. The Hash is subjective because no party other than the Bank can check the validity of the hash value.

The Bank's secret 2400-bit Master Key:
D2DF4D803DC91A3E8EA6504A9CCAD5AB125085F02E54D6EC815 E3AE7C5F7D87F0B0318BF9CF2ED58D89A031451B2429E4E892658 FF5ECE068E2237444104E279E0C2FCCFA5AABCAECF015E9D2130 E8E3607AA0DAF17FF6752CCCA854A940FCEA7BD87A3F07E6A7396 30D26EACB0CA8FE5EEEC63B68F326187C69DC3662A6145B322224 B5A636ABF8340CA4A79E3600EBAF51EDC184026455CB45DDDCD9 E6D9D38E923AE14366EDA9BDBA3EEBF0F17923F87BE93CB0B1B03 75F6E08678A5042281EE278B343B6132D36C5ED39DB546FCBD13B 4B287AD560640DCE83EE8D87A3F51AA27F52F354B4EA4AB03F4EE DDA72792F148D8BA127EDBCD38DA958824F97DEB8B7C622A9C8A CD0A8B3F18D1AF5442D7C2C91EB3288CC51F0E367E33C693FF4B0 5A3331A43214B1B3ED113

The above Master Key is segmented into 200 primitives. These primitives are refreshed (hence the term "salted") by the addition of the Account number and the Sort code. The primitives create a 14-figure number sequence, then, in a separate calculation, the 2-figure checksum is added:

| Account number Sort code | Device Key |
|---|---|
| 12445273 | 30-98-69 71045860855462 + 84 check number pair |
| 12445274 | 30-98-69 08621149169911 + 16 check number pair |
| 12445275 | 30-98-69 94807481543334 + 01 check number pair |

| | |
|---|---|
| Note that the smallest alteration to the account number or to the Sort Code generates a completely different Device Key. | |

## Claims

1. Means for facilitating the carrying out of monetary transactions comprising a device on which a user-specific key is recorded and an algorithm for generating a signal in response to an input, the signal being related to the user-specific key and the time at which the input is received.

2. Means as claimed in Claim 1, in which the signal is in the form of a cryptographically secure pseudo-random stream.

3. Means as claimed in Claim 2, in which the signal is displayed as 4-figure PIN.

4. Means as claimed in Claim 3, in which the algorithm is such that the stream, and hence the PIN, changes each minute.

5. A method of obtaining funds from an automated teller machine that includes the use of the means claimed in Claim 3 or Claim 4 to generate the PIN that is entered into the automated teller machine.
